# EUROPEAN PATENT APPLICATION

(11) **EP 4 592 632 A1**
(43) Date of publication of application: **30.07.2025**
(21) Application number: 25152648.9
(22) Date of filing: 17.01.2025
(51) Int. Cl.: F28F 3/12, H01M 10/65, F28F 21/08

(54) **HEAT EXCHANGE APPARATUS AND BATTERY PACK**

(30) Priority: 24.01.2024 JP 2024008504
(71) Applicant: Zacros Corporation, Tokyo 112-0002 (JP)
(72) Inventor: ICHIMARU, Naohiro, Tokyo, 112-0002 (JP); MORINO, Atsushi, Tokyo, 112-0002 (JP)
(74) Representative: Godemeyer Blum Lenze Patentanwälte Partnerschaft mbB - werkpatent

(57) **Abstract**

One aspect of the present invention relates to a heat exchange apparatus which includes: a bag body having therein a heat exchange flow path through which a heat exchange medium flows; and a plate-shaped body having therein a supply flow path that communicates with one end of the heat exchange flow path and supplies the heat exchange medium to the heat exchange flow path, and a recovery flow path that communicates with the other end of the heat exchange flow path and recovers the heat exchange medium, in which the bag body has an inlet port through which the heat exchange medium flows in and an outlet port through which the heat exchange medium flows out, the plate-shaped body has a first boss portion having an outlet hole that communicates with the supply flow path and allows the heat exchange medium to flow out, and a second boss portion having an inlet hole that communicates with the recovery flow path and allows the heat exchange medium to flow in, the first boss portion is fitted to the inlet port, and the second boss portion is fitted to the outlet port.

## Description

### TECHNICAL FIELD

The present invention relates to a heat exchange apparatus and a battery pack.

### BACKGROUND ART

A heat exchange apparatus that cools heat generated when a battery mounted on an electric vehicle and the like is used has been known.

For example, Patent Document 1 discloses a battery cooling apparatus including a cooler disposed between a lower surface of a battery module and an upper surface of a bottom plate of a battery case, a partition wall that is formed inside the cooler and connects an upper wall and a lower wall of the cooler, and a plurality of rectification paths that are formed inside the cooler so as to be parallel in a horizontal direction by being partitioned by the partition wall and that allows a coolant to flow.

### PRIOR ART DOCUMENTS

### Patent Documents

Patent Document 1: Japanese Unexamined Patent Application, First Publication No. 2018-163741

### SUMMARY OF THE INVENTION

### PROBLEM TO BE SOLVED BY THE INVENTION

However, in such a conventional heat exchange apparatus, the cooling portion is the lower surface of the battery, so that heat generated from the side surface of the battery cannot be suppressed, and there is a problem that sufficient cooling performance cannot be obtained.

In view of the above points, an objective of the present invention is to provide a heat exchange apparatus capable of improving cooling performance.

### MEANS FOR SOLVING THE PROBLEM

A heat exchange apparatus according to one aspect of the present invention includes: a bag body having therein a heat exchange flow path through which a heat exchange medium flows; and a plate-shaped body having therein a supply flow path that communicates with one end of the heat exchange flow path and supplies the heat exchange medium to the heat exchange flow path, and a recovery flow path that communicates with the other end of the heat exchange flow path and recovers the heat exchange medium, in which the bag body has an inlet port through which the heat exchange medium flows in and an outlet port through which the heat exchange medium flows out, the plate-shaped body has a first boss portion having an outlet hole that communicates with the supply flow path and allows the heat exchange medium to flow out, and a second boss portion having an inlet hole that communicates with the recovery flow path and allows the heat exchange medium to flow in, the first boss portion is fitted to the inlet port, and the second boss portion is fitted to the outlet port.

### EFFECTS OF INVENTION

According to the heat exchange apparatus according to one aspect of the present invention, cooling performance can be improved.

### BRIEF DESCRIPTION OF THE DRAWINGS

Fig. 1 is a perspective view of a heat exchange apparatus according to an embodiment as viewed from one direction.
Fig. 2 is an exploded perspective view of a heat exchange apparatus according to an embodiment as viewed from one direction.
Fig. 3 is a perspective view of a heat exchange apparatus according to an embodiment as viewed from another direction.
Fig. 4 is a perspective view of a bag body according to an embodiment.
Fig. 5 is a view illustrating a cross section taken along line I-I in Fig. 4.
Fig. 6 is a schematic view of a cross section of a front surface sheet of a bag body according to an embodiment.
Fig. 7 is a view for explaining a flow of a heat exchange medium in a heat exchange apparatus according to an embodiment.
Fig. 8 is a perspective view of a battery pack according to an embodiment as viewed from one direction.

### BEST MODE FOR CARRYING OUT THE INVENTION

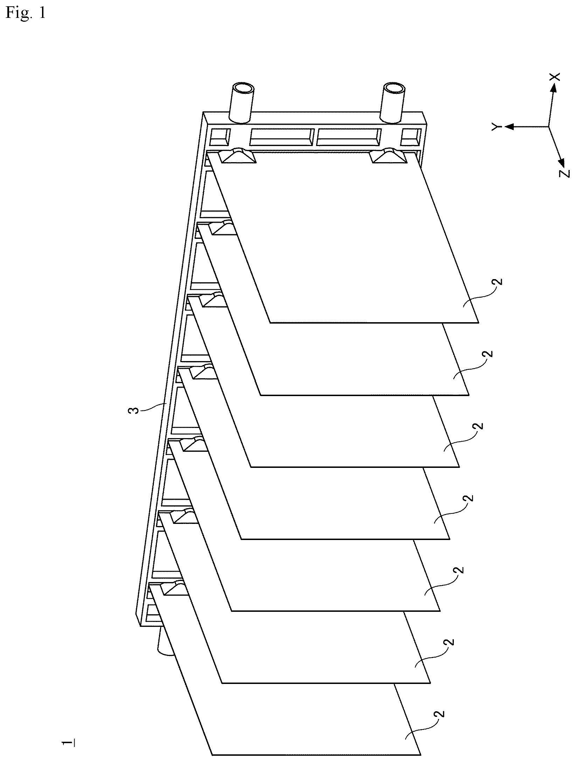

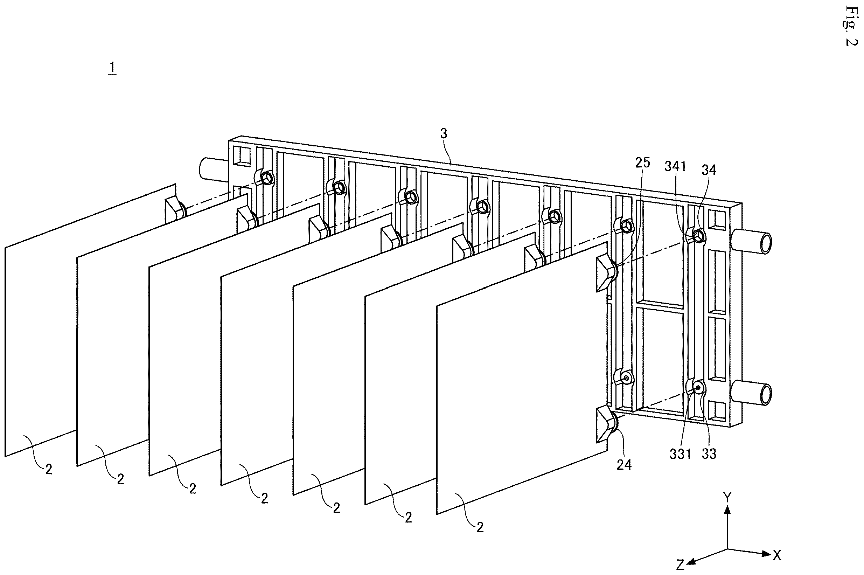

Hereinafter, embodiments of the present invention will be described with reference to the drawings. In order to facilitate understanding of the description, the same components are denoted by the same reference numerals in the drawings, and redundant description may be omitted. In the present specification, a three-dimensional orthogonal coordinate system of three axial directions (X direction, Y direction, Z direction) is used, and in a plane parallel to a surface F1 of a plate-shaped body 3, one of two directions orthogonal to each other is defined as an X direction, the other is defined as a Y direction, and a direction perpendicular to the surface F1 of the plate-shaped body 3 is defined as a Z direction. Note that the posture of a heat exchange apparatus 1 at the time of use is not limited to the example shown in Figs. 1 and 2.

### <Heat exchange apparatus>

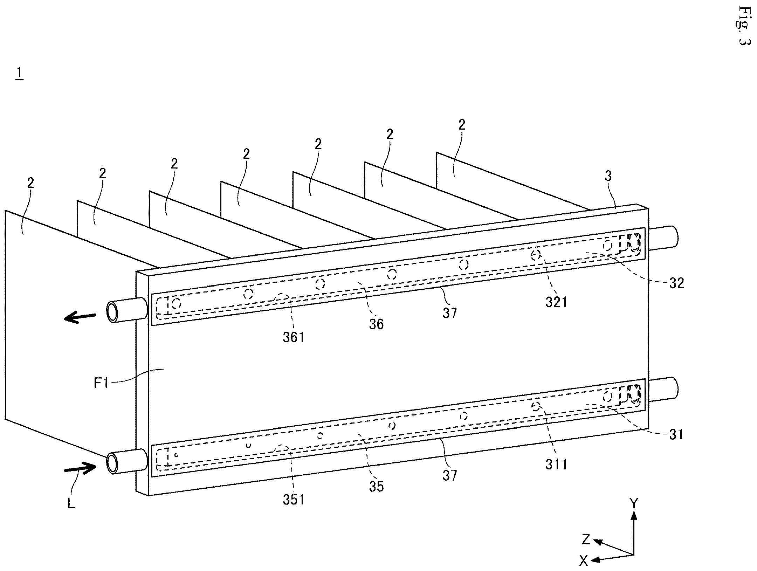

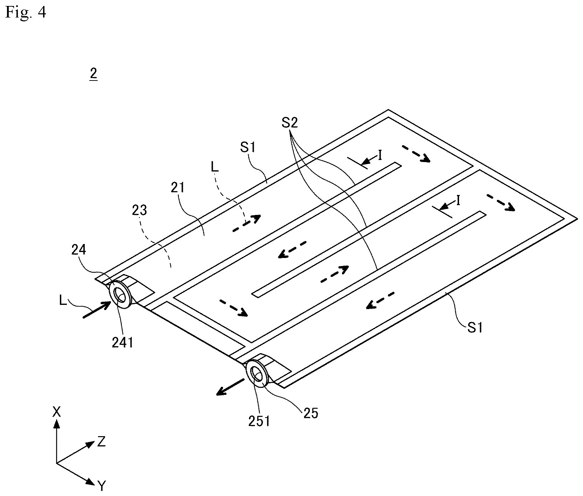

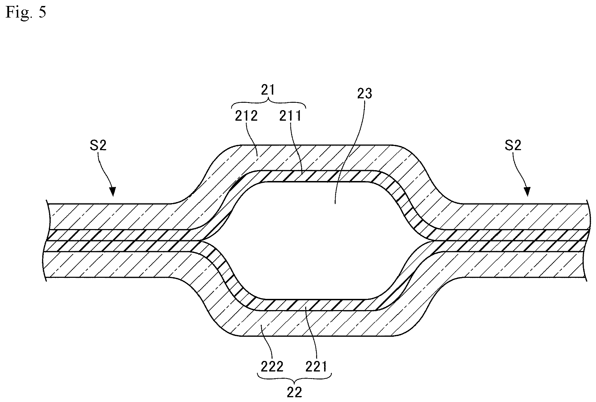

Fig. 1 is a perspective view of a heat exchange apparatus according to an embodiment as viewed from one direction, Fig. 2 is an exploded perspective view of a heat exchange apparatus according to an embodiment as viewed from one direction, Fig. 3 is a perspective view of a heat exchange apparatus according to an embodiment as viewed from another direction, Fig. 4 is a perspective view of a bag body according to an embodiment, and Fig. 5 is a view illustrating a cross section taken along line I-I of Fig. 4. In Fig. 4, solid and broken arrows indicate the flow of a heat exchange medium.

As shown in Figs. 1 to 4, the heat exchange apparatus 1 internally includes a bag body 2 having a heat exchange flow path 23 through which a heat exchange medium L flows, and a plate-shaped body 3. The plate-shaped body 3 internally includes a supply flow path 31 that communicates with one end of the heat exchange flow path 23 and supplies the heat exchange medium L to the heat exchange flow path 23, and a recovery flow path 32 that communicates with the other end of the heat exchange flow path 23 and recovers the heat exchange medium L. In the example shown in Figs. 1 to 3, the plurality of bag bodies 2 is attached to the plate-shaped body 3 in parallel while being separated from each other. In this case, it is possible to cool a cooling target by disposing the cooling target such as a battery between the adjacent bag bodies 2. In the present embodiment, an example in which the heat exchange apparatus 1 includes the plurality of bag bodies 2 will be described, but the present invention is not limited thereto, and the heat exchange apparatus 1 may include one bag body 2.

The bag body 2 has an inlet port 241 into which the heat exchange medium L flows and an outlet port 251 from which the heat exchange medium L flows out. The shape of the bag body 2 can be, for example, a quadrangle in plan view.

As shown in Fig. 5, the bag body 2 may include a front surface sheet 21 and a back surface sheet 22 facing the front surface sheet 21. The bag body 2 may be formed by bending one sheet, or may be formed by bonding a plurality of sheets. That is, the front surface sheet 21 and the back surface sheet 22 constituting the bag body 2 may be formed of one sheet or may be formed of each separate sheets.

The front surface sheet 21 may be constituted by a laminated film having a first sealant layer 211 on the innermost side, and the back surface sheet 22 may be constituted by a laminated film having a second sealant layer 221 on the innermost side.

Specifically, the front surface sheet 21 can be constituted by a laminated film in which the first sealant layer 211 and a base material layer 212 are laminated. The material constituting the first sealant layer 211 is preferably the same kind of material as the material constituting a first port member 24 and a second port member 25 described later from the viewpoint of heat sealability.

Examples of the material constituting the first sealant layer 211 include polyethylene, polypropylene, and the like. The material constituting the first sealant layer 211 is preferably polypropylene. Since the material constituting the first sealant layer 211 is polypropylene, the seal portion (heat-sealed portion) of the bag body 2 can obtain high adhesive strength in a high-temperature environment, and the bag body 2 can have appropriate rigidity. As the polypropylene, cast polypropylene (CPP) can be suitably used.

The material constituting the first sealant layer 211 more preferably contains block polypropylene. This makes it possible to suppress permeation of the heat exchange medium L from the first sealant layer 211 into the base material layer 212.

The first sealant layer 211 may be constituted by one layer or a plurality of layers. When the first sealant layer 211 is constituted by a plurality of layers, it preferably has a three-layer configuration in which a layer composed of block polypropylene is sandwiched between two layers composed of random polypropylene. The layer made of block polypropylene has a function of suppressing permeation of the heat exchange medium L into other adjacent layers, and the layer made of random polypropylene has a function of firmly adhering to other layers. Therefore, with the above-described three-layer configuration, durability of the bag body 2 can be improved.

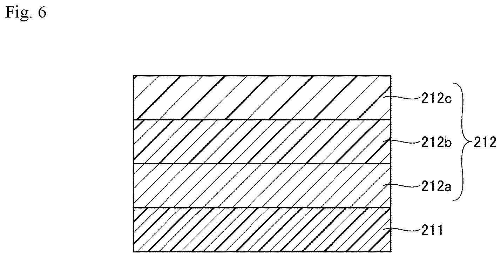

The base material layer 212 may be constituted by one layer or a plurality of layers. Fig. 6 is a schematic view of a cross section of a front surface sheet of a bag body according to an embodiment. The base material layer 212 can be constituted by, for example, a plurality of layers in which a metal layer 212a and resin layers 212b and 212c are laminated in this order on the first sealant layer 211 as shown in Fig. 6.

The metal layer 212a can be, for example, a metal foil, a vapor deposited metal film, and the like. Examples of the material constituting the metal layer 212a include aluminum, copper, stainless steel, and titanium. Among them, the material constituting the metal layer 212a preferably contains aluminum. As a result, the heat exchange apparatus 1 can further improve the cooling efficiency and can be reduced in weight.

The thickness of the metal layer 212a is preferably 7 µm or more, and more preferably 30 µm or more. Since the thickness of the metal layer 212a is 7 µm or more, the heat exchange apparatus 1 can further improve the cooling efficiency, and good handleability can be obtained. The thickness of the metal layer 212a is preferably 60 µm or less, and more preferably 50 µm or less. Since the thickness of the metal layer 212a is 60 µm or less, the bag body 2 can have sufficient flexibility for being in close contact with a heat exchange object.

The resin layer is constituted by two layers in the example shown in Fig. 6, but the resin layer may be constituted by one layer or three or more layers. When the resin layers 212b and 212c are constituted by two layers, for example, the material constituting the inner resin layer 212b can be nylon, and the material constituting the outer resin layer 212c can be polyethylene terephthalate. Since the material constituting the resin layer 212b is nylon, the bag body 2 can improve the pressure resistance when the heat exchange medium L flows through the heat exchange flow path 23, and can suppress the generation of pinholes. Since the material constituting the resin layer 212c is polyethylene terephthalate, the bag body 2 can improve scratch resistance. Examples of the material constituting the resin layers 212b and 212c include nylon, polyethylene terephthalate, polyester, and the like.

The layers constituting the front surface sheet 21 may be bonded via an adhesive layer or an anchor agent layer, or may be directly bonded. The front surface sheet 21 may have a layer other than the metal layer 212a and the resin layers 212b and 212c outside the first sealant layer 211.

Since the configuration of the back surface sheet 22 is the same as that of the front surface sheet 21 described above, the description thereof is omitted. Since the configuration of the second sealant layer 221 is the same as that of the first sealant layer 211 described above, the description thereof is omitted.

The thickness of each of the front surface sheet 21 and the back surface sheet 22 is preferably 150 µm or more and 350 µm or less, and more preferably 200 µm or more and 300 µm or less.

As shown in Figs. 4 and 5, the bag body 2 may have a peripheral edge seal portion S1 where the first sealant layer 211 and the second sealant layer 221 are joined at the peripheral edge portion, and an inner seal portion S2 where the first sealant layer 211 and the second sealant layer 221 are joined at the inner side than the peripheral edge seal portion S 1. The peripheral edge seal portion S1 and the inner seal portion S2 are, for example, seal portions in which the first sealant layer 211 and the second sealant layer 221 are heat-sealed. The bag body 2 may be a pouch container.

The heat exchange flow path 23 is constituted by the peripheral edge seal portion S1, the inner seal portion S2, and the inner surface of the bag body 2. In the example shown in Fig. 4, the heat exchange flow path 23 has a wave shape with three folded portions in plan view. The shape of the heat exchange flow path 23 in plan view may be, for example, a rectangular wave shape, a sinusoidal wave shape, or a triangular wave shape. That is, the shape of the heat exchange flow path 23 in plan view may be a shape in which a U-shape is repeated or a shape in which a V-shape is repeated. When the heat exchange flow path 23 has a wave shape in plan view, the number of folded portions can be an odd number.

The bag body 2 may include the first port member 24 having the inlet port 241 and the second port member 25 having the outlet port 251. The first port member 24 and the second port member 25 are each provided between the front surface sheet 21 and the back surface sheet 22, and heat-sealed to the first sealant layer 211 and the second sealant layer 221.

The material constituting the first port member 24 and the second port member 25 is preferably a material that can be suitably used as long as it can be bonded to the first sealant layer 211 and the second sealant layer 221 to ensure sealability and that can be heat-sealed to the first sealant layer 211 and the second sealant layer 221. The material constituting the first port member 24 and the second port member 25 is more preferably the same kind of material as the material constituting the first sealant layer 211 and the second sealant layer 221 from the viewpoint of heat sealability.

Each of the first port member 24 and the second port member 25 may be a tubular member, and may have a flange portion extending outward from one end. Each of the first port member 24 and the second port member 25 may be a spout. Since each of the first port member 24 and the second port member 25 is a spout having a flange portion, the contact area between each of the first port member 24 and the second port member 25, and the first sealant layer 211 and the second sealant layer 221 is increased, so that the adhesive strength therebetween can be increased.

When the shape of the bag body 2 is a quadrangle in plan view, the first port member 24 and the second port member 25 are provided on one side of the bag body 2. With this configuration, the supply flow path 31 and the recovery flow path 32 can be collectively disposed on the one side of the bag body 2, and the heat exchange apparatus 1 can be downsized. In the example shown in Figs. 1 to 4, the shape of the bag body 2 is rectangular in plan view, and the first port member 24 and the second port member 25 are provided on the short side of the bag body 2.

As shown in Fig. 3, the plate-shaped body 3 includes a first boss portion 33 having an outlet hole 331 that communicates with the supply flow path 31 and allows the heat exchange medium L to flow out, and a second boss portion 34 having an inlet hole 341 that communicates with the recovery flow path 32 and allows the heat exchange medium L to flow in. The first boss portion 33 is fitted to the inlet port 241, and the second boss portion 34 is fitted to the outlet port 251. When the first boss portion 33 is fitted to the inlet port 241 and the second boss portion 34 is fitted to the outlet port 251, the outlet hole 331 of the first boss portion 33 and the inlet port 241 of the bag body 2 communicate with each other, and the inlet hole 341 of the second boss portion 34 and the outlet port 251 of the bag body 2 communicate with each other. The outlet hole 331 and the inlet port 241 are coaxially arranged, and the inlet hole 341 and the outlet port 251 are coaxially arranged.

The plate-shaped body 3 may have a plurality of first boss portions 33 and a plurality of second boss portions 34. When the plate-shaped body 3 has a plurality of first boss portions 33 and a plurality of second boss portions 34, a plurality of pairs of the first boss portion 33 and the second boss portion 34 is spaced apart from each other on the back surface (the surface on the side on which the bag body 2 is disposed) of the plate-shaped body 3.

The first boss portion 33 and the inlet port 241, and the second boss portion 34 and the outlet port 251 are liquid-tightly fitted to each other. The first boss portion 33 and the inlet port 241, and the second boss portion 34 and the outlet port 251 may be fitted via an O-ring, may be heat-sealed, or may be fitted via an adhesive. An example of the adhesive is an adhesive containing modified silicone.

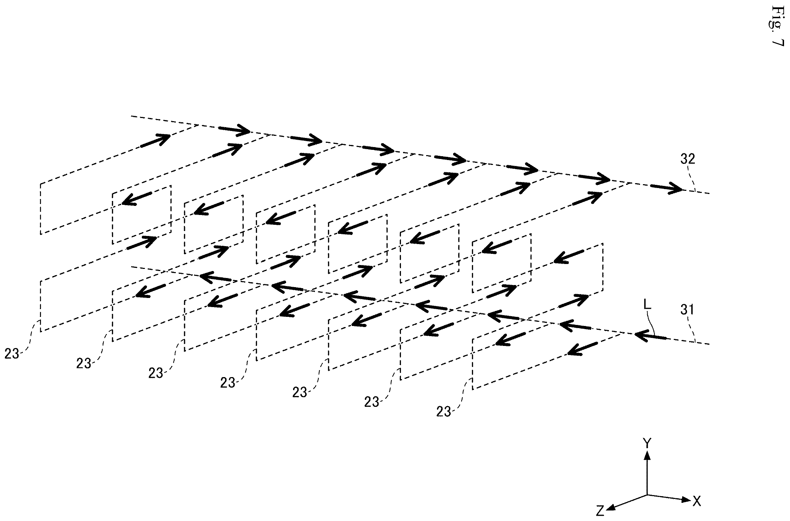

Fig. 7 is a view for explaining a flow of a heat exchange medium in a heat exchange apparatus according to an embodiment. In Fig. 7, the supply flow path 31, the recovery flow path 32, and the heat exchange flow path 23 are indicated by broken lines, and other configurations are omitted. In Fig. 7, arrows indicate the flow of the heat exchange medium L. As shown in Fig. 7, the heat exchange medium L flowing through the supply flow path 31 inside the plate-shaped body 3 flows into one end (upstream end) of the heat exchange flow path 23 inside the bag body 2 from the inlet port 241 of the bag body 2 via the outlet hole 331, and when reaching the other end of the heat exchange flow path 23, the heat exchange medium L flows into the recovery flow path 32 inside the plate-shaped body 3 from the inlet hole 341 via the outlet port 251 of the bag body 2.

The heat exchange medium L exchanges heat with a heat exchange object while flowing through the heat exchange flow path 23, and circulates as shown in Fig. 7, so that the heat exchange apparatus 1 can maintain cooling performance. When the heat exchange apparatus 1 includes the plurality of bag bodies 2, the heat exchange medium L flowing through the supply flow path 31 inside the plate-shaped body 3 is diverted to the respective inlet ports 241 of the plurality of bag bodies 2, and the heat exchange medium L flowing out from the respective outlet ports 251 of the plurality of bag bodies 2 joins the recovery flow path 32 inside the plate-shaped body 3. The heat exchange medium L joined to the recovery flow path 32 is sent to, for example, a radiator and cooled, and returns to the supply flow path 31 again. In the example shown in Fig. 7, the heat exchange medium L flowing through the supply flow path 31 is diverted in the direction perpendicular to the supply flow path 31, and the heat exchange medium L flowing out from the outlet port 251 of each of the plurality of bag bodies 2 joins in the direction perpendicular to the recovery flow path 32.

The plate-shaped body 3 has a first groove portion 35 and a second groove portion 36 which are open on a surface F1 (a surface opposite a surface on a side where the bag body 2 is disposed) and extend in a first direction (X direction), and the first groove portion 35 and the second groove portion 36 are disposed in parallel. That is, the surface F1 of the plate-shaped body 3 has two openings 351 and 361. The plate-shaped body 3 includes a sealing member 37 that seals the opening portions 351 and 361 of the first groove portion 35 and the second groove portion 36, respectively. The plate-shaped body 3 may have two sealing members 37, and one opening may be sealed with one of the sealing members 37. The plate-shaped body 3 may have one sealing member 37, and the two openings 351 and 361 may be sealed with the one sealing member 37.

The sealing member 37 can be a film-like member or a sheet-like member. The thickness of the sealing member 37 can be, for example, 10 µm or more and 100 µm or less. The sealing member 37 may have a heat-sealing resin layer on one surface. When the sealing member 37 has a heat-sealing resin layer on one surface, the heat-sealing resin layer and the surface F1 of the plate-shaped body 3 may be heat-sealed. Examples of the material constituting the heat-sealing resin layer include polyethylene, polypropylene, and the like. The heat-sealing resin layer may be constituted by one layer or may be constituted by a plurality of layers.

### <Battery pack>

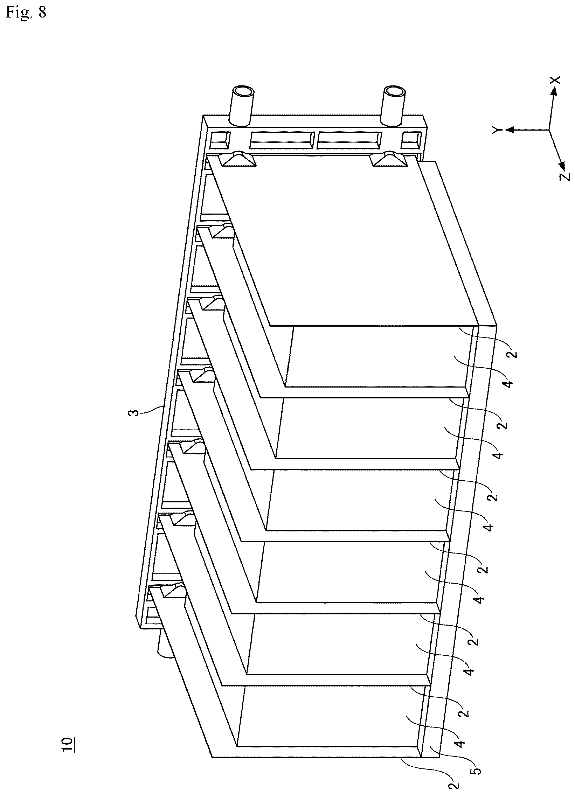

Fig. 8 is a perspective view of a battery pack according to an embodiment as viewed from one direction. As shown in Fig. 8, a battery pack 10 of the present embodiment includes the heat exchange apparatus 1 of the present embodiment and a plurality of battery cells 4. Each of the plurality of battery cells 4 is disposed between the plurality of bag bodies 2. Each of the plurality of battery cells 4 is preferably disposed in contact with the adjacent bag body 2. In the example shown in Fig. 8, the dimension of the outer shape of the battery cell 4 is smaller than the dimension of the outer shape of the bag body 2 when viewed from the X direction. However, the dimension of the outer shape of the battery cell 4 may be larger than the dimension of the outer shape of the bag body 2 or may be the same as the dimension of the outer shape of the bag body 2.

The battery pack 10 may include a support member 5 that supports the plurality of battery cells 4. The battery pack 10 may further include a cover (not shown) that covers the heat exchange apparatus 1 and the plurality of battery cells 4.

As described above, the heat exchange apparatus 1 of the present embodiment includes a bag body 2 and a plate-shaped body 3 having a supply flow path 31 and a recovery flow path 32, in which the bag body 2 has an inlet port 241 and an outlet port 251, the plate-shaped body 3 has a first boss portion 33 and a second boss portion 34, the first boss portion 33 is fitted to the inlet port 241, and the second boss portion 34 is fitted to the outlet port 251. With this configuration, the bag bodies 2 can be arranged to face both side surfaces of a heat exchange object in the heat exchange apparatus 1, so that cooling can be performed from both side surfaces of the heat exchange object. In addition, when the heat exchange object is a battery, the bag body 2 follows the deformation of the battery and can maintain a state of being in contact with the battery even if the battery expands due to charge and discharge, aged deterioration, an increase in internal pressure, or the like. Therefore, according to the heat exchange apparatus 1, cooling performance can be improved. Furthermore, since the first boss portion 33 is fitted to the inlet port 241, and the second boss portion 34 is fitted to the outlet port 251, the heat exchange apparatus 1 can suppress the heat exchange medium L from leaking from the connection portion between the bag body 2 and the plate-shaped body 3, and can maintain the cooling performance.

In the present embodiment, the bag body 2 includes the front surface sheet 21, the back surface sheet 22, the first port member 24, and the second port member 25. The front surface sheet 21 is constituted by a laminated film having the first sealant layer 211 on the innermost side, and the back surface sheet 22 is constituted by a laminated film having the second sealant layer 221 on the innermost side. Furthermore, the first port member 24 and the second port member 25 are each provided between the front surface sheet 21 and the back surface sheet 22, and heat-sealed to the first sealant layer 211 and the second sealant layer 221. With this configuration, the first port member 24 and the second port member 25 are respectively heat-sealed to the first sealant layer 211 and the second sealant layer 221, and thus are bonded to the first sealant layer 211 and the second sealant layer 221 with sufficient adhesive strength. Therefore, the heat exchange apparatus 1 can suppress the heat exchange medium L from leaking from the bag body 2, and can further maintain the cooling performance.

In the present embodiment, the outlet hole 331 and the inlet port 241 are coaxially arranged, and the inlet hole 341 and the outlet port 251 are coaxially arranged. As a result, the pressure loss when the heat exchange medium L flows into or out of the bag body 2 can be reduced, and the heat exchange medium L can be spread throughout the bag body 2. Therefore, according to the heat exchange apparatus 1, cooling performance can be further improved.

In the present embodiment, the bag body 2 includes the peripheral edge seal portion S 1 and the inner seal portion S2, and the heat exchange flow path 23 is constituted by the peripheral edge seal portion S1, the inner seal portion S2, and the inner surface of the bag body 2. With this configuration, the width of the inner seal portion S2 can be made relatively small, so that the ratio of the area of the heat exchange flow path 23 to the bag body 2 can be increased. Therefore, the contact area between the heat exchange medium L and a heat exchange object can be made relatively large in the heat exchange apparatus 1, and the cooling performance can be further improved.

In the present embodiment, each of the front surface sheet 21 and the back surface sheet 22 includes a metal layer. As a result, the heat exchange apparatus 1 can improve the heat exchange efficiency, so that the cooling performance can be further improved.

In the present embodiment, the plate-shaped body 3 includes the plurality of first boss portions 33 and the plurality of second boss portions 34, and the plurality of bag bodies 2 is attached to the plate-shaped body 3 in parallel while being separated from each other. With this configuration, when the heat exchange object is a battery, each of the plurality of battery cells constituting the battery can be disposed between the plurality of bag bodies 2, and all the battery cells can be cooled from both side surfaces. Therefore, the heat exchange apparatus 1 can further improve the cooling performance.

The battery pack 10 of the present embodiment includes the heat exchange apparatus 1 and the plurality of battery cells 4, and each of the plurality of battery cells 4 is disposed between the plurality of bag bodies 2. With this configuration, the heat exchange apparatus 1 can cool the battery cells 4 from both side surfaces. In addition, even when the battery cell 4 expands due to charge and discharge, aged deterioration, an increase in internal pressure, or the like, the bag body 2 can follow the deformation of the battery cell 4 and maintain a state of being in contact with the battery cell 4. Therefore, according to the battery pack 10, the cooling performance of the battery cell 4 can be improved.

### (Aspects of the present invention)

The present invention includes the following aspects.
<Aspect 1> A heat exchange apparatus including:
   a bag body having therein a heat exchange flow path through which a heat exchange medium flows; and
   a plate-shaped body having therein a supply flow path that communicates with one end of the heat exchange flow path and supplies the heat exchange medium to the heat exchange flow path, and a recovery flow path that communicates with the other end of the heat exchange flow path and recovers the heat exchange medium,
   in which the bag body has an inlet port through which the heat exchange medium flows in and an outlet port through which the heat exchange medium flows out,
   the plate-shaped body has a first boss portion having an outlet hole that communicates with the supply flow path and allows the heat exchange medium to flow out, and a second boss portion having an inlet hole that communicates with the recovery flow path and allows the heat exchange medium to flow in, and
   the first boss portion is fitted to the inlet port, and the second boss portion is fitted to the outlet port.
<Aspect 2> The heat exchange apparatus according to Aspect 1,
   in which the bag body includes a front surface sheet, a back surface sheet facing the front surface sheet, a first port member having the inlet port, and a second port member having the outlet port,
   the front surface sheet is constituted by a laminated film having a first sealant layer on the innermost side,
   the back surface sheet is constituted by a laminated film having a second sealant layer on the innermost side, and
   each of the first port member and the second port member is provided between the front surface sheet and the back surface sheet, and heat-sealed to the first sealant layer and the second sealant layer.
<Aspect 3> The heat exchange apparatus according to Aspect 1 or 2, in which the outlet hole and the inlet port are coaxially arranged, and the inlet hole and the outlet port are coaxially arranged.
<Aspect 4> The heat exchange apparatus according to Aspect 2 or 3,
   in which the bag body has a peripheral edge seal portion where the first sealant layer and the second sealant layer are joined at the peripheral edge portion, and an inner seal portion where the first sealant layer and the second sealant layer are joined at the inner side than the peripheral edge seal portion, and
   the heat exchange flow path is constituted by the peripheral seal portion, the inner seal portion, and an inner surface of the bag body.
<Aspect 5> The heat exchange apparatus according to any one of Aspects 2 to 4, in which each of the front surface sheet and the back surface sheet includes a metal layer.
<Aspect 6> The heat exchange apparatus according to any one of Aspects 1 to 5,
   in which the plate-shaped body includes a plurality of the first boss portions and a plurality of the second boss portions, and
   a plurality of the bag bodies is attached to the plate-shaped body in parallel while being separated from each other.
<Aspect 7> A battery pack including:
   the heat exchange apparatus according to any one of Aspects 1 to 6; and
   a plurality of battery cells,
   in which each of the plurality of battery cells is disposed between the plurality of bag bodies.

The heat exchange apparatus 1 of the present embodiment includes a heat exchange apparatus for cooling a vehicle battery. In addition, the heat exchange apparatus 1 can be applied to a heat exchange apparatus for cooling an electric motor mounted on a vehicle, a heat exchange apparatus for cooling a power semiconductor element of a power driving device, and the like. The heat exchange apparatus 1 can also be applied to a heat exchange apparatus for heating by using the heat exchange medium L for heating.

Embodiments have been described above, but the above-described embodiments are presented as examples, and the present invention is not limited by the above-described embodiments. The above-described embodiments can be implemented in various other forms, and various combinations, omissions, substitutions, changes, or the like can be made without departing from the gist of the invention. These embodiments and modifications thereof are included in the scope and gist of the invention, and are included in the invention recited in the claims and the equivalent scope thereof.

### DESCRIPTION OF THE REFERENCE NUMERALS

- 1: Heat exchange apparatus
- 2: Bag body
- 21: Front surface sheet
- 211: First sealant layer
- 22: Back surface sheet
- 221: Second sealant layer
- 23: Heat exchange flow path
- 24: First port member
- 241: Inlet port
- 25: Second port member
- 251: Outlet port
- 3: Plate-shaped body
- 31: Supply flow path
- 32: Recovery flow path
- 33: First boss portion
- 331: Outlet hole
- 34: Second boss portion
- 341: Inlet hole
- 4: Battery cell
- 10: Battery pack
- L: Heat exchange medium
- S1: Peripheral edge seal portion
- S2: Inner seal portion

## Claims

1. A heat exchange apparatus comprising:
a bag body having therein a heat exchange flow path through which a heat exchange medium flows; and
a plate-shaped body having therein a supply flow path that communicates with one end of the heat exchange flow path and supplies the heat exchange medium to the heat exchange flow path, and a recovery flow path that communicates with the other end of the heat exchange flow path and recovers the heat exchange medium,
wherein the bag body has an inlet port through which the heat exchange medium flows in and an outlet port through which the heat exchange medium flows out,
the plate-shaped body has a first boss portion having an outlet hole that communicates with the supply flow path and allows the heat exchange medium to flow out, and a second boss portion having an inlet hole that communicates with the recovery flow path and allows the heat exchange medium to flow in, and
the first boss portion is fitted to the inlet port, and the second boss portion is fitted to the outlet port.

2. The heat exchange apparatus according to claim 1,
wherein the bag body includes a front surface sheet, a back surface sheet facing the front surface sheet, a first port member having the inlet port, and a second port member having the outlet port,
the front surface sheet is constituted by a laminated film having a first sealant layer on an innermost side,
the back surface sheet is constituted by a laminated film having a second sealant layer on an innermost side, and
each of the first port member and the second port member is provided between the front surface sheet and the back surface sheet, and heat-sealed to the first sealant layer and the second sealant layer.

3. The heat exchange apparatus according to claim 1 or 2, wherein the outlet hole and the inlet port are coaxially arranged, and the inlet hole and the outlet port are coaxially arranged.

4. The heat exchange apparatus according to claim 2 or 3,
wherein the bag body has a peripheral edge seal portion where the first sealant layer and the second sealant layer are joined at a peripheral edge portion, and an inner seal portion where the first sealant layer and the second sealant layer are joined at an inner side than the peripheral edge seal portion, and
the heat exchange flow path is constituted by the peripheral seal portion, the inner seal portion, and an inner surface of the bag body.

5. The heat exchange apparatus according to any one of claims 2 to 4, wherein each of the front surface sheet and the back surface sheet includes a metal layer.

6. The heat exchange apparatus according to any one of claims 1 to 5,
wherein the plate-shaped body includes a plurality of the first boss portions and a plurality of the second boss portions, and
a plurality of the bag bodies is attached to the plate-shaped body in parallel while being separated from each other.

7. A battery pack comprising:
the heat exchange apparatus according to any one of claims 1 to 6; and
a plurality of battery cells,
wherein each of the plurality of battery cells is disposed between the plurality of bag bodies.
